# EUROPEAN PATENT APPLICATION

(11) **EP 2 180 716 A1**
(43) Date of publication of application: **28.04.2010**
(21) Application number: 09171166.3
(22) Date of filing: 24.09.2009
(51) Int. Cl.: H04N 13/00

(54) **Autostereoscopic display with observer tracking**

(30) Priority: 21.10.2008 KR 20080103220; 26.11.2008 KR 20080118212
(71) Applicant: Electronics and Telecommunications Research Institute, Daejeon 305-350 (KR)
(72) Inventor: Lee, Hyun, Daejeon 302-777 (KR); Lee, Gwang-Soon, Daejeon 305-250 (KR); Lee, Bong-Ho, Daejeon 305-250 (KR); Yun, Kug-Jin, Daejeon 305-759 (KR); Hur, Namho, Daejeon 305-768 (KR); Kim, Jin-Woong, Daejeon 305-761 (KR); Lee, Soo-In, Daejeon 302-772 (KR)
(74) Representative: Betten & Resch

(57) **Abstract**

An autostereoscopic display apparatus and method, and a personal terminal using the same are provided. The autostereoscopic display apparatus includes: a position calculating unit configured to calculate a position of an observer; an image control unit configured to determine whether to swap display positions of a left image and a right image according to the calculated position of the observer; and an autostereoscopic display unit configured to alternately display the left image and the right image according to the swapping determination of the image control unit.

## Description

### CROSS-REFERENCE TO RELATED APPLICATIONS

The present invention claims priority of Korean Patent Application Nos. 10-2008-0103220 and 10-2008-0118212, filed on October 21, 2008, and November 26, 2008, respectively, which are incorporated herein by reference.

### BACKGROUND OF THE INVENTION

### Field of the Invention

The present invention relates to a stereoscopic display apparatus and method; and, more particularly, to an autostereoscopic display apparatus and a method, and a personal terminal using the same.

### Description of Related Art

Even though observing the same object with both eyes, an observer observes different images due to a visual angle difference between both eyes. The observer can perceive a stereoscopic image through the different images. A general image display apparatus displays a flat image. Thus, an observer cannot feel a stereoscopic feeling when observing an image through the image display apparatus. This is because an observer observes the same image through his two eyes.

A stereoscopic display apparatus enables an observer to observe two different images having a visual angle difference with his two eyes. Through the stereoscopic display apparatus, the observer can feel a similar stereoscopic feeling to a case of observing the object actually.

In many cases, conventional stereoscopic display apparatuses use glasses specialized for stereoscopic images. For example, perpendicular polarization filters are disposed on two lenses of the glasses, and an observer wearing the glasses observes two images having perpendicular polarization directions. The lenses of the glasses transmit only light having the same polarization direction as the polarization filters of the lenses. Accordingly, only an image having the same polarization direction as the polarization filter is observed through one lens. Likewise, an image having the perpendicular polarization direction is observed through the other lens. The images passing through the lenses seem to be separated on two eyes of the observer. Therefore, an observer wearing the glasses specialized for the stereoscopic image can observe different images with his two eyes.

Meanwhile, extensive studies have been conducted on autostereoscopic display apparatuses that require no glasses. Autostereoscopic display apparatuses may use a parallax barrier method and a lenticular lens method.

The parallax barrier method was proposed as Parallax Stereogram in 1903 by F.E Ives of the United States. According to the parallax barrier method, a left image and a right image are alternately arranged, and a grid having light transmitting portions and light shielding portions alternately is arranged spaced apart by an appropriate distance in front of an image. In this way, a visual angle difference between the left image and the right image occurs through the light transmitting portions of the grid. Therefore, there exist positions where the left image is observed with a left eye and the right image is observed with a right eye. The observer can observe the stereoscopic image at those positions. Such a grid is referred to as a parallax barrier.

The lenticular lens method uses a cylindrical lens instead of the parallax barrier. According to the lenticular lens method, a cylindrical lens is arranged in front of a left image and a right image displayed alternately, and the left image and the right image are separated by refraction of light. The observer can observe the left image with his left eye and the right image with his right eye through the cylindrical lens.

However, the parallax barrier method or the lenticular lens method has a disadvantage that a visible region or range of the stereoscopic image is narrow. The parallax barrier or the lenticular lens enables the observer to observe the left image and the right image separately, but it is difficult for the observer to exactly observe the separated images even though the positions of the left eye and the right eye are changed slightly. Due to those limitations, the conventional autostereoscopic display apparatuses are significantly limited in terms of the viewing positions of stereoscopic images.

To solve those problems, one of the proposed techniques is disclosed in Korean Patent Unexamined Publication No. 2007-0023849, in which a barrier electrode is divided into a plurality of fine barrier electrodes, the fine barrier electrodes are combined according to positions of an observer. However, since an additional apparatus for fine barrier is needed, the complexity is increased and the production cost is also increased significantly. Furthermore, such a method cannot apply to the lenticular lens method.

### SUMMARY OF THE INVENTION

An embodiment of the present invention is directed to expansion of a visible range where an observer can observe an autostereoscopic image.

Another embodiment of the present invention is directed to providing a technology for expanding a visible range of an autostereoscopic image, which is capable of maximally reducing the complexity of hardware and providing a relatively simple implementation.

In accordance with an aspect of the present invention, there is provided a stereoscopic display apparatus, including: a position calculating unit configured to calculate a position of an observer; an image control unit configured to determine whether to swap display positions of a left image and a right image according to the calculated position of the observer; and an autostereoscopic display unit configured to alternately display the left image and the right image according to the swapping determination of the image control unit.

In accordance with another aspect of the present invention, there is provided a stereoscopic display method, including: calculating a position of an observer; determining whether to swap display positions of a left image and a right image according to the calculated position of the observer; and alternately displaying the left image and the right image according to the swapping determination of the image control unit.

In accordance with still another aspect of the present invention, there is provided a personal terminal, including: a camera configured to take an image containing an observer; an image control unit configured to calculate a position of the observer from the taken image and determine whether to swap display positions of a left image and a right image according to the calculated position of the observer; and an autostereoscopic display configured to alternately display the left image and the right image according to the swapping determination.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

### BRIEF DESCRIPTION OF THE DRAWINGS

Fig. 1 illustrates an observer and a stereoscopic display apparatus in accordance with an embodiment of the present invention.

Fig. 2 illustrates observers and an autostereoscopic display unit in accordance with an embodiment of the present invention.

Fig. 3 illustrates a swapping of display positions of a left image and a right image in accordance with an embodiment of the present invention.

Fig. 4 is a flowchart illustrating a stereoscopic display method in accordance with an embodiment of the present invention.

Fig. 5 illustrates a personal terminal in accordance with an embodiment of the present invention.

### DESCRIPTION OF SPECIFIC EMBODIMEMTS

The advantages, features and aspects of the invention will become apparent from the following description of the embodiments with reference to the accompanying drawings, which is set forth hereinafter.

Generally, when displaying a stereoscopic image, a left image and a right image are alternately displayed. Display positions of the left image and the right image are swapped according to positions of an observer who observes the stereoscopic image. Therefore, a visible range at which the observer can observe the stereoscopic image is widened. Hereinafter, embodiments of the present invention will be described in detail with reference to the accompanying drawings.

<First Embodiment : Stereoscopic Display Apparatus>

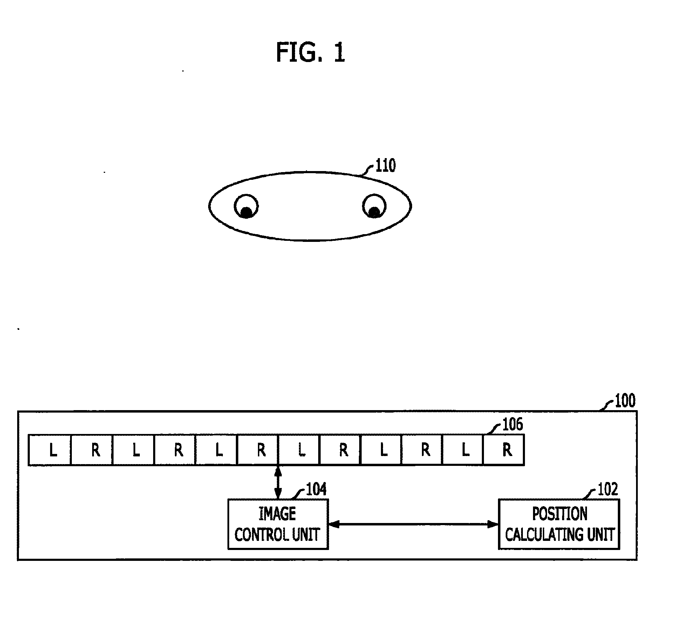

Fig. 1 illustrates an observer 110 and a stereoscopic display apparatus 100 in accordance with an embodiment of the present invention.

Referring to Fig. 1, the stereoscopic display apparatus 100 includes a position calculating unit 102, an image control unit 104, and an autostereoscopic display unit 106.

The position calculating unit 102 calculates a position of the observer 110 and transmits the calculated position to the image control unit 104. The calculated position of the observer 110 may be positions of the observer's two eyes. Also, the position calculating unit 102 may periodically calculate the position of the observer 110.

The image control unit 104 receives the calculated position of the observer 110 from the position calculating unit 102. The image control unit 104 determines whether to swap the display positions of left and right images according to the position of the observer 110. To enable the observer 110 to observe the stereoscopic image, the autostereoscopic display unit 106 alternately displays the left image and the right image. In this case, the positions where the left image and the right image are displayed may be exchanged with each other, and the image control unit 104 determines whether to exchange the display positions of the left image and the right image. In this specification, such an exchange of the display positions is referred to as a swapping.

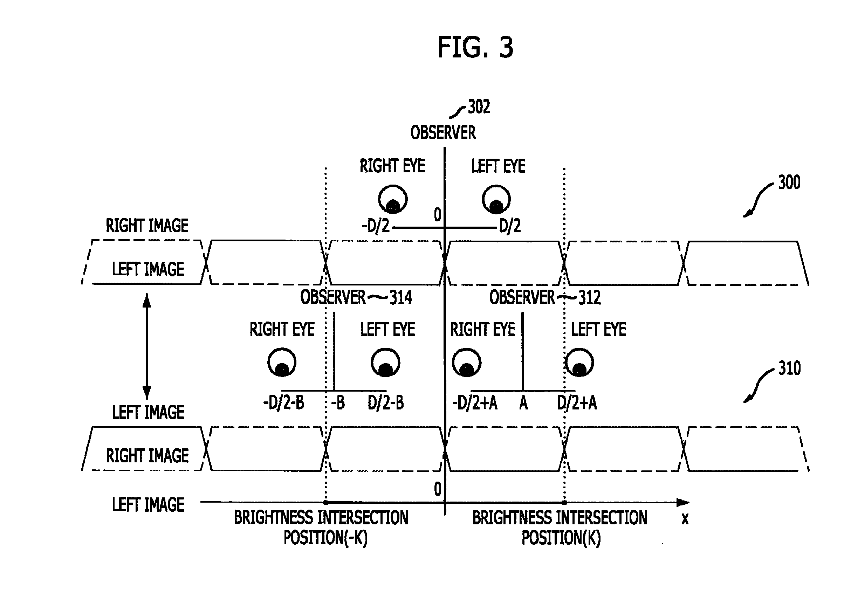

The image control unit 104 may determine whether to swap the display positions to make the left image observed with the left eye of the observer 110 and the right image observed with the right eye of the observer 110. Furthermore, the image control unit 104 may determine whether to swap the display positions by comparing the brightness intersection position of the left and right images with the position of the observer 110. The left image is observed at one side and the right image is observed at the other side with reference to the brightness intersection position of the left and right images. Detailed description on it will be presented below with reference to Fig. 3.

The autostereoscopic display unit 106 receives the swapping determination from the image control unit 104. In Fig. 1, "L" and "R" in the autostereoscopic display unit 106 represent the left image and the right image, respectively. The positions of "L" and "R" shown in Fig. 1 are the basic display positions of the left image and the right image.

The autostereoscopic display unit 106 alternately displays the left image and the right image according to the swapping determination. That is, when it is determined not to swap the display positions, the left image and the right image are alternately displayed at the basic display positions. On the other hand, when it is determined to swap the display positions, the left image and the right image are displayed on the positions where "L" and "R" in Fig. 1 are swapped.

The autostereoscopic display unit 106 may include a visual angle control unit configured to control visual angles of the left image and the right image. The visual angle control unit controls the visual angles so that the left image and the right image alternately displayed are observed with one of the two eyes of the observer 110. Examples of the visual angle control unit may include a parallax barrier and a lenticular lens. The autostereoscopic display unit 106 may display the autostereoscopic image by using one of the parallax barrier and the lenticular lens.

The observer 110 can observe the stereoscopic image through the autostereoscopic display unit 106 without wearing the glasses designed for observing the stereoscopic image. Furthermore, the observer 110 can view the stereoscopic image through the stereoscopic display apparatus 100 in a relatively wide visible range.

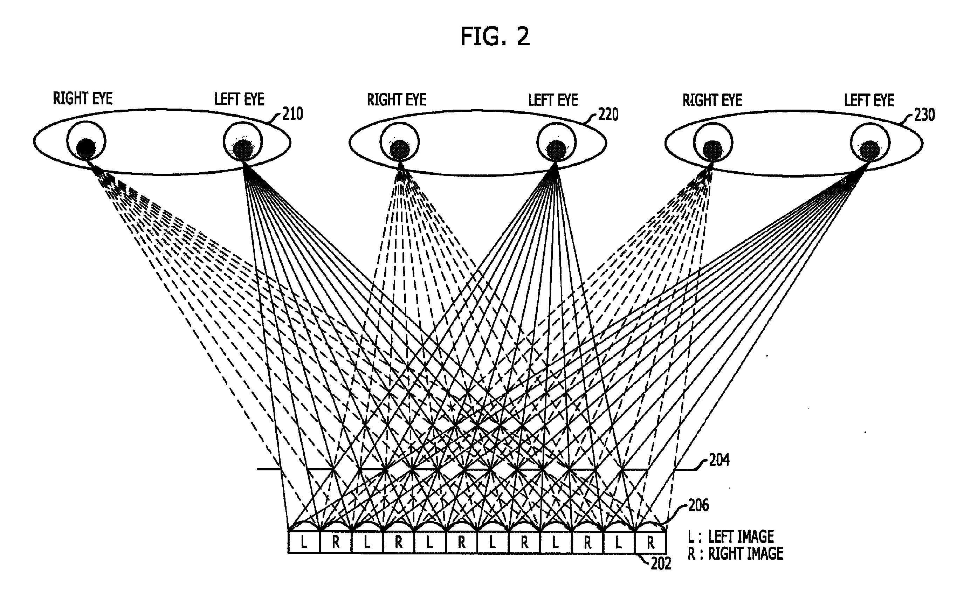

Fig. 2 illustrates observers and an autostereoscopic display unit in accordance with an embodiment of the present invention. Images observed by first to third observers 210, 220 and 230 located at different positions will be described below with reference to Fig. 2.

Referring to Fig. 2, the autostereoscopic display unit includes an image display panel 202, a parallax barrier 204, and a lenticular lens 206. In some cases, the autostereoscopic display unit may include one of the parallax barrier 204 and the lenticular lens 206.

The image display panel 202 alternately displays a left image and a right image. In Fig. 2, the left image and the right image are represented by "L" and "R", respectively. The image display panel 202 may be implemented with various display devices, for example, liquid crystal displays (LCD), plasma display panels (PDP), field emission displays (FED), electro-luminescent displays (ELD), or organic light emitting diodes (OLED).

In case where the autostereoscopic display unit includes the parallax barrier 204, the second observer 220 observes the image display panel 202 through the parallax barrier 204. Therefore, the second observer 220 cannot observe an image displayed on a region that is shielded by the parallax barrier 204.

As illustrated in Fig. 2, a region where the right image R is displayed is shielded by the parallax barrier 204 at the position of the left eye of the second observer 220. Meanwhile, a region where the left image L is displayed is shielded by the parallax barrier 204 at the position of the right eye of the second observer 220. Thus, the second observer 220 can observe the left image with his left eye and the right image with his right eye. In the similar manner, the first observer 210 and the third observer 230 can observe the left image with their left eyes and the right image with their right eyes.

In case where the autostereoscopic display unit includes the lenticular lens 206, the lenticular lens 206 controls visual angles of the left image and the right image. That is, the lenticular lens 206 refracts a direction of light displayed by the left image and the right image. Thus, the first observer 210, the second observer 220, and the third observer 230 can observe the left image with their left eyes and the right image with their right eyes.

Although not illustrated in Fig. 2, when the second observer 220 slightly moves to the left or the right, the second observer 220 observes an image in which the left image and the right image are not clearly separated from each other. When the second observer 220 slowly moves to the left or the right, the second observer 220 observes the left image with his left eye and gradually observes the right image much more. That is, although the left image should be observed with the left eye of the second observer 220, a mixed image of the left image and the right image is observed with the left eye of the second observer 220. In this case, it is apparent that the second observer 220 observes the right image with his right eye and gradually observes the left image much more. Consequently, when the second observer 220 moves more to the left or the right, the right image is observed with the left eye of the second observer 220, and the left image is observed with the right eye of the second observer 220. In this case, it is difficult for the second observer 220 to feel a stereoscopic feeling from the left image and the right image.

Therefore, in the current embodiment, whether to swap the display positions of the left image and the right image according to the position of the second observer 220 is determined and then the left image and the right image are displayed according to the swapping determination. That is, when the second observer 220 moves in a horizontal direction from his position in Fig. 2, an image containing both the left image and the right image is observed with the left eye of the second observer 220. As the second observer 220 moves, the right image is contained gradually much more. When the second observer 220 moves to a position where an image containing the right image much more than the left image is observed with his left eye, the display positions of the left image and the right image in the image display panel 202 are swapped. That is, the display positions of the left image and the right image in the image display panel 202 are exchanged with each other in order that the image containing the left image much more is observed with the left eye of the second observer 220 and the image containing the right image much more is observed with the right eye of the second observer 220.

Whether to swap the display positions of the left image and the right image is determined according to the position of the observer. In this case, a method for calculating the position of the observer is needed. Various techniques capable of calculating the position of the observer have been known. One example is disclosed in Korean Patent Registration No. 0793077, entitled "Method for Determining Position of Observer, and Observer-Tracking Type 3D Display System and Method." In this way, the determination of the position of the observer can be implemented in various manners.

Fig. 3 illustrates a swapping of display positions of a left image and a right image in accordance with an embodiment of the present invention.

A case where the image control unit determines whether to swap the display positions of the left image and the right image by using the brightness intersection position of the left image and the right image will be described below with reference to Fig. 3.

In Fig. 3, a graph showing the brightness of the left image and the right image is divided into two brightness graphs 300 and 310 according to the position of the observer. Each of the two brightness graphs 300 and 310 includes a pair of a brightness graph of the left image and a brightness graph of the right image. The brightness of the left image is indicated by a solid line, and the brightness of the right image is indicated by a dotted line.

Generally, the observer observes the autostereoscopic display unit at a location spaced apart by a predetermined distance. Since the left image and the right image are alternately displayed on the autostereoscopic display unit, the brightness values of the left image and the right image at the position of the observer are intersected as illustrated in the brightness graphs 300 and 310. The image control unit swaps the display positions of the left image and the right image in order that the left image and the right image are displayed on the left eye and the right eye of the observer. That is, the image control unit controls the display positions of the images in order that a portion having a high brightness is positioned at the left eye of the observer and a portion having a low brightness is positioned at the right eye of the observer. This case will be described below in detail. The position of the observer is represented with reference to the center of the left eye and the right eye.

Since the left image and the right image are alternately displayed, a brightness intersection position exists. The brightness intersection position may periodically exist in several locations. A first brightness intersection position is represented by x=K and x=-K, centered on x=0. A central brightness intersection position is represented by x=0.

An observer 302 is located at the central position of x=0 on x-axis. When distance between the left eye and the right eye of the observer 302 is represented by D, the coordinates of the left eye and the right eye are D/2 and -D/2, respectively. The distance D may be 6 seconds to 6.5 seconds. As illustrated in Fig. 3, when the observer 302 is located at a position of x=0, a portion having a high brightness of the left image is located on the left eye (x=D/2) and a portion having a high brightness of the right image is located on the right eye (x=-D/2). The image control unit sets the display positions of the left image and the right image in order that the brightness of the left image and the brightness of the right image are displayed as shown in the brightness graph 300.

An observer 312 is located at a position of x=A. When a distance between the left eye and the right eye is D, the left eye of the observer 312 is located at a position of x=D/2+A, and the right eye of the observer 312 is located at a position of x=-D/2+A. As illustrated in Fig. 3, the left eye of the observer 312 is located at the right with respect to the brightness intersection position of x=K on x-axis. Also, the right eye of the observer 312 is located at the right with respect to the central brightness intersection position of x=0 on x-axis. Therefore, when an image like the brightness graph 300 is displayed to the observer 312, the left eye of the observer 312 observes the right image and the right eye of the observer 312 observes the left image.

The image control unit swaps the display positions of the left image and the right image in order that the image is displayed as shown in the brightness graph 310. That is, the image control unit determines whether to swap the display positions of the left image and the right image by comparing the calculated position of the observer 312 with the brightness intersection position. The position of the observer 312 may be the positions of the two eyes of the observer 312. Meanwhile, unlike the case of Fig. 3, when D/2+A is smaller than K, the left image and the right image like the brightness graph 300 may be displayed to the observer 312.

Meanwhile, an observer 314 is located at a position of x=-B. Thus, the image control unit determines whether to swap the display positions of the left image and the right image by comparing the position (x=-D/2-B) of the right eye of the observer 314 with the brightness intersection position (x=-K). Since -D/2-B < -B in Fig. 3, the image control unit makes the left image and the right image displayed as shown in the brightness graph 310.

According to the above-mentioned standard, the image control unit may swap the display positions of the left image and the right image. Thus, the observer can observe the stereoscopic image in a wide visible range.

<Second Embodiment : Stereoscopic Display Method>

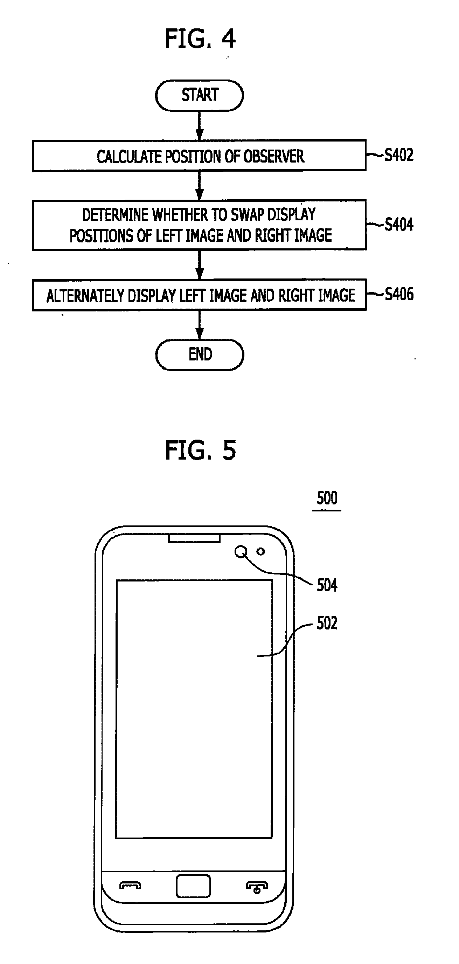

Fig. 4 is a flowchart illustrating a stereoscopic display method in accordance with an embodiment of the present invention.

Referring to Fig. 4, the stereoscopic display method includes calculating a position of an observer in step S402, determining whether to swap display positions of a left image and a right image in step S404, and alternately displaying the left image and the right image in step S406.

In this case, the position of the observer may mean positions of two eyes of the observer. Also, the position of the observer may be periodically calculated. The display positions of the left image and the right image may be controlled to be suitable to the position of the observer who continuously moves. Therefore, the observer can observe the stereoscopic image without hindrance of motions such as movement or shaking.

The swapping means exchanging the display positions of the left image and the right image that are alternately displayed.

The swapping may be determined to make the left image observed with the left eye of the observer and the right image observed with the right eye of the observer. Furthermore, the swapping may be determined by comparing the brightness intersection position of the left image and the right image with the position of the observer.

In this case, the left image and the right image may be displayed like an autostereoscopic image by using a parallax barrier and/or a lenticular lens.

Since a further detailed description about the current embodiment has been made above in the first embodiment described, it will be omitted herein.

<Third Embodiment : Personal Terminal>

Fig. 5 illustrates a personal terminal 500 in accordance with an embodiment of the present invention.

Referring to Fig. 5, the personal terminal 500 includes a stereoscopic display 502 and a camera 504. The personal terminal is a generic term of display apparatuses, such as portable phones, portable multimedia players (PMP), MPEG audio layer-3 players (MP3P), notebook computers, personal computers (PC), personal digital assistants (PDA), portable PCs, smart phones, voice over Internet protocol (VoIP) phones, personal televisions, digital multimedia broadcasting (DMB) display devices, or navigation systems.

The observer is a user who uses the personal terminal 500 and a person who observes the stereoscopic display 502. The camera 504 takes an image containing the observer, and transmits the taken image to the image control unit. The camera 504 may periodically take an image containing the observer.

Although not illustrated in Fig. 5, the personal terminal 500 includes an image control unit. The image control unit calculates a position of the observer by processing the image taken by the camera 504. The image control unit determines whether to swap display positions of the left image and the right image according to the calculated position of the observer. In this case, the image control unit may determine the swapping to make the left image displayed on the left eye of the observer and the right image displayed on the right eye of the observer. Furthermore, the image control unit may determine the swapping by comparing a brightness intersection position of the left image and the right image with the position of the observer. When the camera 504 periodically transmits information about the image containing the observer, the image control unit may control the display positions of the left image and the right image by continuing to periodically calculate the position of the observer in real time.

The stereoscopic display 502 alternately displays the left image and the right image according to the swapping determination of the image control unit. A stereoscopic rendering unit or the like may be used for displaying the left image and the right image on the stereoscopic display 502.

When the current embodiment is implemented using a general personal terminal, it may be modified to include a stereoscopic display in hardware. Other parts necessary for the embodiments of the present invention may be implemented in software. Therefore, the embodiments of the present invention can be implemented using the personal terminal relatively simply while minimizing complexity of hardware. Moreover, in accordance with the embodiments of the present invention, the observer can observe the stereoscopic images in a wide visible range.

Since a further detailed description about the current embodiment has been made above in the first embodiment described, it will be omitted herein.

The above-mentioned apparatuses and systems may be implemented in hardware, software or combination thereof. In the hardware implementation, the modules used for stereoscopic display may be implemented with one or more of application-specific integrated circuits (ASIC), digital signal processors (DSP), digital signal processing devices (DSPD), programmable logic devices (PLD), field programmable gate arrays (FPGA), processors, controllers, microcontrollers, microprocessors, other electronic units designed to execute the above-mentioned functions, and combinations thereof. Software codes may be stored in memory units and executed by processors. The memory units may be implemented inside or outside the processors. In this case, the memory units may be connected to the processors through various known devices.

In accordance with the embodiments of the present invention, the visible range where the observer can observe the autostereoscopic image is expanded.

Moreover, in the technology for expanding the visible range of the autostereoscopic image, the complexity of hardware can be greatly reduced and the software can be maximally used with a relatively simple implementation.

The above-mentioned method in accordance with the embodiment of the present invention can also be realized as computer programs. Codes and code segments constituting the programs can be easily derived by computer programmers skilled in the art to which the present invention pertains. Furthermore, the programs are stored in computer-readable recording media (data storage media) and are read and executed by a computer. The recording media may include any recording media that can be read by a computer. The recording media may include tangible media such as CD or DVD and intangible media such as carrier waves.

While the present invention has been described with respect to the specific embodiments, it will be apparent to those skilled in the art that various changes and modifications may be made without departing from the spirit and scope of the invention as defined in the following claims.

## Claims

1. A stereoscopic display apparatus, comprising:
a position calculating unit configured to calculate a position of an observer;
an image control unit configured to determine whether to swap display positions of a left image and a right image according to the calculated position of the observer; and
an autostereoscopic display unit configured to alternately display the left image and the right image according to the swapping determination of the image control unit.

2. The stereoscopic display apparatus of claim 1, wherein the image control unit determines the swapping to make the left image observed with a left eye of the observer and the right image observed with a right eye of the observer.

3. The stereoscopic display apparatus of claim 1, wherein the image control unit determines the swapping by comparing a brightness intersection position of the left image and the right image with the position of the observer.

4. The stereoscopic display apparatus of claim 1, 2, or 3, wherein the position calculating unit periodically calculates the position of the observer.

5. The stereoscopic display apparatus of one of claims 1 to 4, wherein the position of the observer is positions of the observer's two eyes.

6. The stereoscopic display apparatus of one of claims 1 to 5, wherein the autostereoscopic display unit displays an autostereoscopic image by using a parallax barrier and/or a lenticular lens.

7. A stereoscopic display method, comprising:
calculating a position of an observer;
determining whether to swap display positions of a left image and a right image according to the calculated position of the observer; and
alternately displaying the left image and the right image according to the swapping determination of the image control unit.

8. The stereoscopic display method of claim 7, wherein in said swapping the display positions of the left image and the right image,
whether to swap display positions of a left image and a right image is determined in such a manner that the left image is observed with a left eye of the observer and the right image is observed with a right eye of the observer.

9. The stereoscopic display method of claim 7, wherein in said swapping the display positions of the left image and the right image,
whether to swap display positions of a left image and a right image is determined by comparing a brightness intersection position of the left image and the right image with the position of the observer.

10. The stereoscopic display method of claim 7, 8, or 9, wherein the position of the observer is periodically calculated.

11. The stereoscopic display method of one of claims 7 to 10, wherein the position of the observer is positions of the observer's two eyes.

12. The stereoscopic display method of one of claims 7 to 11, wherein said alternately displaying the left image and the right image comprises displaying an autostereoscopic image by using a parallax barrier and/or a lenticular lens.

13. A personal terminal, comprising:
a camera configured to take an image containing an observer;
an image control unit configured to calculate a position of the observer from the taken image and determine whether to swap display positions of a left image and a right image according to the calculated position of the observer; and
an autostereoscopic display configured to alternately display the left image and the right image according to the swapping determination.

14. The personal terminal of claim 13, wherein the image control unit determines the swapping to make the left image observed with a left eye of the observer and the right image observed with a right eye of the observer.

15. The personal terminal of claim 13, wherein the image control unit determines the swapping by comparing a brightness intersection position of the left image and the right image with the position of the observer.
